# EUROPEAN PATENT APPLICATION

(11) **EP 4 620 685 A1**
(43) Date of publication of application: **24.09.2025**
(21) Application number: 24780947.8
(22) Date of filing: 16.05.2024
(51) Int. Cl.: B41J 2/19, B01D 19/00, B41J 2/01, B41J 2/18, B41J 2/175

(54) **DEAERATION DEVICE, INKJET RECORDING DEVICE, AND DEAERATION METHOD**

(30) Priority: 29.03.2023 JP 2023053961
(71) Applicant: KYOCERA Document Solutions Inc., Osaka-shi, Osaka 540-8585 (JP)
(72) Inventor: SAKAOKA, Shinya, Osaka-shi, Osaka 540-8585 (JP); YOSHIDA, Takeru, Osaka-shi, Osaka 540-8585 (JP); ISHIDA, Hideki, Osaka-shi, Osaka 540-8585 (JP); YAMAGISHI, Yoshihiro, Osaka-shi, Osaka 540-8585 (JP)
(74) Representative: Kurig, Thomas
(86) International application number: PCT/JP2024/018067
(87) International publication number: WO 2024/204855

(57) **Abstract**

A degassing device (40) includes a liquid tank (32) which stores the liquid; a pressure reducing device (62) which reduces pressure in the liquid tank (32); a circulation flow path (47) which connects different positions of the liquid tank (32); and a circulation device (67) which circulates the liquid through the circulation flow path (47). When air dissolved in the liquid in the liquid tank (32) is removed, the degassing device (40) is switchable into a first degassing operation in which while the circulation device (67) circulates the liquid through the circulation flow path (47), the pressure reducing device (62) reduces the pressure in the liquid tank (32), and into a second operation in which the circulation device (67) stops the circulation of the liquid through the circulation flow path (47) and the pressure reducing device (62) reduces the pressure in the liquid tank (32).

## Description

### [Technical Field]

The present invention relates to a degassing device, an inkjet recording apparatus and a degassing method.

### [Background]

In an inkjet recording apparatus, an ink droplet is ejected through a nozzle of a recording head, if bubbles are included in the ink, the nozzle of the recording head may be clogged. Therefore, it is desired to suppress an amount of dissolved air in the ink, and a degassing device for removing the air dissolved in the ink has been studied. For example, a degassing device that stirs the ink while the inside of an ink tank is reduced in pressure is known (for example, see Patent documents 1 and 2). In the degassing device, a magnetic force is applied to a stirrer in the ink tank from the outside, and the stirrer is rotated by the magnetic force to stir the ink in the ink tank.

### [Prior art documents]

### [Patent Document]

Patent Document 1: Japanese Patent Publication No.5030305
Patent Document 2: Japanese Patent Laid-Open No. 2019-142189

### [Summary of the invention]

### [Problems to be solved by invention]

In the degassing device described above, the inside of the ink tank is in a reduced pressure atmosphere, and the ink in the ink tank is stirred by the rotation of the stirrer, and the ink is degassed near the liquid surface. However, since the stirrer is positioned at the bottom of the ink tank, for example, when the ink capacity is increased, the ink near the liquid surface where an amount of dissolved air is small and the ink near the bottom surface where an amount of dissolved air is large are difficult to be replaced, and the degassing efficiency is lowered. Further, since the contact area between the ink and the air increases due to the liquid surface agitation caused by the stirring, if the ink with a small amount of dissolved air continues to be stirred, the air tends to dissolve into the ink and the degassing efficiency is lowered. In addition, when the above-described degassing device is used for degassing liquids other than ink, a similar defect occurs.

Accordingly, it is an object of the present invention to provide a degassing device capable of improving the degassing efficiency of the dissolved air in the ink, an inkjet recording apparatus and a degassing method.

### [Means of Solving the Problems]

A degassing device according to the present invention removes air dissolved in a liquid under a reduced pressure atmosphere. The degassing device includes a liquid tank which stores the liquid; a pressure reducing device which reduces pressure in the liquid tank; a circulation flow path which connects different positions of the liquid tank; and a circulation device which circulates the liquid through the circulation flow path, wherein when air dissolved in the liquid in the liquid tank is removed, the degassing device is switchable into a first degassing operation in which while the circulation device circulates the liquid through the circulation flow path, the pressure reducing device reduces the pressure in the liquid tank, and into a second operation in which the circulation device stops the circulation of the liquid through the circulation flow path and the pressure reducing device reduces the pressure in the liquid tank.

An inkjet recording apparatus according to the present invention includes the degassing device and a recording head which ejects a degassed ink as the liquid to a sheet.

A degassing method using the degassing device includes a first degassing process of performing the first degassing operation when the amount of dissolved air of the liquid in the liquid tank is equal to or larger than a predetermined value; and a second degassing process of performing the second degassing operation when the amount of dissolved air of the liquid in the liquid tank is less than the predetermined value.

### [Effects of the Invention]

According to the present invention, it becomes possible to improve the degassing efficiency of the dissolved air in the ink.

### [Brief Description of Drawings]

[FIG. 1] FIG. 1 is a schematic view showing an inkjet recording apparatus according to one embodiment of the present invention.
[FIG. 2] FIG. 2 is a schematic view showing a degassing device according to the embodiment of the present invention.
[FIG. 3] FIG. 3 is a graph showing a relationship between an amount of dissolved air in ink and a standing time of the ink.
[FIG. 4] FIG. 4 is a graph showing a relationship between an amount of dissolved air in the ink and a degassing time in cases where the ink is degassed by a circulation degassing system and a stirring degassing system.
[FIG. 5] FIG. 5 is a flowchart showing a degassing method according to the embodiment of the present invention.
[FIG. 6] FIG. 6 is a graph showing a relationship between an amount of dissolved air in the ink and an atmosphere opening time in cases where the ink is circulated and not circulated.
[FIG. 7] FIG. 7 is a graph showing a relationship between an amount of dissolved air in the ink and an atmosphere opening time in cases where an atmosphere opening valve is full-opened instantly and over a predetermined time.

### [Embodiment for carrying out the Invention]

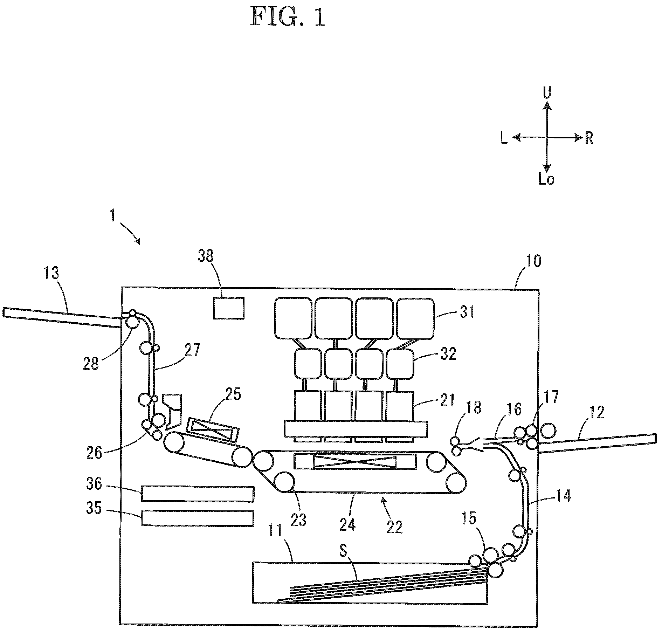

Hereinafter, with reference to FIG. 1, an inkjet recording apparatus 1 of the present embodiment will be described. FIG. 1 is a schematic view showing the inkjet recording apparatus 1. The front side of the paper surface on which FIG. 1 is drawn is defined as the front side of the inkjet recording apparatus 1, and the left-and-right direction will be described with reference to the direction in which the inkjet recording apparatus 1 is viewed from the front side. The arrows L, R, U, and Lo attached to each figure indicate the left, right, upper, and lower sides of the inkjet recording apparatus 1, respectively. Terms indicating direction and position are used herein for convenience of description and not to limit the technical scope of the invention.

The inkjet recording apparatus 1 is formed so as to perform printing by ejecting ink (an example of the liquid) from each inkjet recording head 21 toward a sheet S as a recording medium. The inkjet recording apparatus 1 includes a box-shaped housing 10 in which various devices are housed. A sheet feeding cassette 11 in which the sheet S is set is housed in the lower portion of the housing 10, and a manual sheet feeding tray 12 on which the sheet S is set by hand is installed on the right side surface of the housing 10. On the upper portion of the left side surface of the housing 10, a sheet discharge tray 13 on which the recorded sheet S is loaded is installed.

In the right side portion in the housing 10, a first conveyance path 14 along which the sheet S is conveyed from the sheet feeding cassette 11 to the recording head 21 provided in the center of the housing 10 is formed. On the upstream side of the first conveyance path 14, a first sheet feeding part 15 which feeds the sheet S from the sheet bundle in the sheet feeding cassette 11 is provided, and a pair of registration rollers 18 which adjusts a feeding timing of the sheet S is provided in the downstream portion of the first conveyance path 14. Further, a sheet feeding path 16 extending from the manual sheet feeding tray 12 is merged with the downstream portion of the first conveyance path 14, and a second sheet feeding part 17 which feeds the sheet S from the sheet bundle on the manual sheet feeding tray 12 is provided on the sheet feeding path 16.

On the downstream side of the pair of registration rollers 18, a conveying device 22 and the recording head 21 provided for each color (for example, black, cyan, magenta, and yellow) are installed. The pair of registration rollers 18 corrects the skew of the sheet S, and then sends the sheet S to the conveying device 22 in accordance with an ink ejecting operation by each recording head 21. In the housing 10, an ink container 31 and an ink tank 32 are provided for each recording head 21. The ink of each ink container 31 is temporarily stored in the ink tank 32, the ink is degassed as necessary, and then the ink is supplied from the ink tank 32 to the recording head 21.

The conveying device 22 is constituted by winding a conveyance belt 24 around a plurality of tension rollers 23 installed below the recording heads 21. On the downstream side of the conveying device 22, a drying device 25 which dries the ink on the sheet S is provided. On the downstream side of the drying device 25, a decurl device 26 which corrects a curl generated on the sheet S by drying the ink is provided. On the downstream side of the decurl device 26, a second conveyance path 27 along which the sheet S is conveyed toward the sheet discharge tray 13 is formed. In the downstream portion of the second conveyance path 27, a sheet discharge part 28 which discharges the recorded sheet S to the sheet discharge tray 13 is provided.

Below the drying device 25, a maintenance unit 35 which cleans the recording heads 21 and a cap unit 36 which caps the recording heads 21 are provided. The maintenance unit 35 is provided with a squeegee-shaped wiping blade, and the wiping blade scrapes the ink remaining on the nozzle surface of the recording head 21. The cap unit 36 is provided with a head cap, and the nozzle surface of the recording head 21 is capped with the head cap. The head cap suppresses drying of the ink in the nozzle. The drying of the ink in the nozzle may be further suppressed by storing a liquid such as a cleaning liquid in the head cap.

Further, the inkjet recording apparatus 1 is provided with a control device 38 for controlling the entire apparatus. The control device 38 may be constituted by a processor or a logic circuit (hardware) formed in an integrated circuit or the like. In the case of a processor, the processor reads and executes a program stored in a memory, and various processes are executed. For example, a CPU (Central Processing Unit) is used as the processor. The memory is constituted by one or more storage devices such as a ROM (Read Only Memory), a RAM (Random Access Memory) or the like depending on the application.

At the time of image recording (printing), the sheet S is fed from the sheet feeding cassette 11 or the manual sheet feeding tray 12 by the first sheet feeding part 15 or the second sheet feeding part 17, respectively, and then sent to the pair of registration rollers 18. In accordance with the ejecting timing of the ink, the sheet S is conveyed from the pair of registration rollers 18 to the conveyance belt 24, the degassed ink is ejected from each recording head 21, and a color image is recorded on the surface of the sheet S. The sheet S is dried by the drying device 25, and the curl of the sheet S is corrected by the decurl device 26. The sheet S is conveyed to the sheet discharge part 28 through the second conveyance path 27, and the recorded (printed) sheet S is discharged to the sheet discharge tray 13 by the sheet discharge part 28.

By the way, in a machine such as an on-demand machine in which an amount of the ink used is small, the liquid surface of the ink comes into contact with air in the ink tank 32, and the dissolving of the air proceeds, and the ink is not ejected from the nozzle of the recording head 21 by bubbles in the ink. Therefore, it is desired to appropriately keep an amount of dissolved gas in the ink. For example, a method has been proposed in which by passing the ink through the hollow fiber filter in a state where the pressure of the circumference of the hollow fiber filter is reduced, the air is moved from the wall surface of the hollow fiber to the pressure decreased side to degas the ink. This method requires the expensive hollow fiber filter and requires periodic replacement operations, which increase cost.

In order to decrease an amount of dissolved air in the ink, a system (hereinafter referred to as a stirring degassing system) has been proposed in which the ink is stirred by a stirrer in a state in which the pressure in the ink tank 32 is reduced below an atmospheric pressure to degas the ink. In the stirring degassing system, a magnetic force is applied to the stirrer in the ink tank from the outside, and the stirrer is rotated by the magnetic force to stir the ink in the ink tank 32. When the depth of the ink and the tank diameter are large, the ink is difficult to be stirred, and the degassing efficiency is lowered. As the rotational speed of the stirrer is increased, the ink is easily stirred, but when the rotational speed of the stirrer becomes too high, a loss of synchronization occurs and the rotational sound of the stirrer becomes large. In addition, the contact area between the ink and the air is increased by the liquid surface agitation caused by the stirring, if the ink with a small amount of dissolved air continues to be stirred, the air tends to dissolve into the ink and the degassing efficiency is lowered.

Therefore, the inkjet recording apparatus 1 according to the present embodiment is provided with a degassing device capable of improving the degassing efficiency when the air dissolved in the ink is removed (degassed) under a pressure reduced atmosphere.

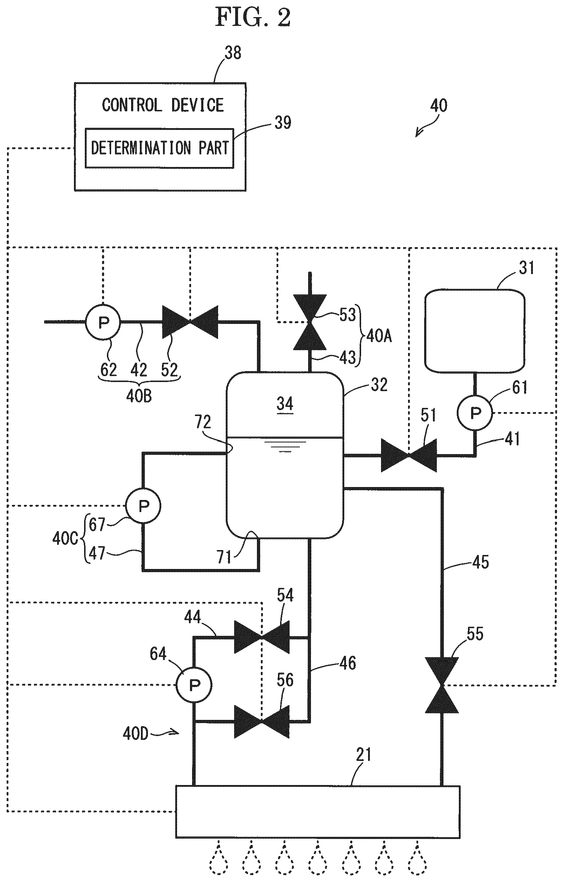

[Degassing Device] With reference to FIG. 2, the degassing device 40 will be described. FIG. 2 is a schematic view showing the degassing device 40. Although the inkjet recording apparatus 1 according to the present embodiment is provided with the degassing devices 40 for each color, one degassing device 40 will be described here.

The degassing device 40 includes the ink tank 32, an atmosphere opening part 40A, a pressure reducing part 40B, a circulation part 40C, and a head circulation part 40D. The degassing device 40 is a device for degassing the ink in the ink tank 32, but also an ink supply structure for supplying (replacing) the ink to the recording head 21.

The ink tank 32 as an example of the liquid tank is connected to the ink container 31 through a replenishment flow path 41 and stores the ink replenished through the replenishment flow path 41. A replenishment valve 51 and a replenishment pump 61 are provided in the replenishment flow path 41. The replenishment valve 51 adjusts a flow rate of the ink passing through the replenishment flow path 41, and the replenishment pump 61 flows (supplies) the ink from the ink container 31 to the ink tank 32 through the replenishment flow path 41. The ink tank 32 is the component of the inkjet recording apparatus 1 and also the component of the degassing device 40.

<Atmosphere Opening Part> The atmosphere opening part 40A includes an atmosphere opening flow path 43 and an atmosphere opening valve 53. The atmosphere opening flow path 43 is provided so as to communicate an upper space 34 of the ink tank 32 with the outside. The atmosphere opening valve 53 is provided in the atmosphere opening flow path 43, and adjusts a flow rate of air passing through the atmosphere opening flow path 43. The inside of the ink tank 32 (the upper space 34) is opened to the atmosphere by opening the atmosphere opening valve 53.

<Pressure Reducing Part> The pressure reducing part 40B includes a pressure reducing flow path 42, a pressure reducing valve 52, and a pressure reducing pump 62. The pressure reducing flow path 42 is provided so as to communicate the upper space 34 of the ink tank 32 with the outside. The pressure reducing valve 52 is provided in the pressure reducing flow path 42, and adjusts a flow rate of air passing through the pressure reducing flow path 42. The pressure reducing pump 62 as an example of the pressure reducing device is provided in the pressure reducing flow path 42, and allows the air to flow from the upper space 34 of the ink tank 32 to the outside through the pressure reducing flow path 42 to reduce the pressure (below the atmospheric pressure) in the ink tank 32 (the upper space 34).

<Circulation Part> The circulation part 40D includes a circulation flow path 47 and a circulation pump 67. The circulation flow path 47 is provided to connect different positions of the ink tank 32. As a specific example, the circulation flow path 47 is provided so as to connect the vicinity of the liquid surface and the vicinity of the bottom surface of the ink tank 32. An inflow port 72 through which the ink flows into the ink tank 32 from the circulation flow path 47 is provided at a higher position than an outflow port 71 through which the ink flows out from the ink tank 32 into the circulation flow path 47. As a specific example, the outflow port 71 is opened to the bottom surface of the ink tank 32, and the inflow port 72 is opened to the side surface of the ink tank 32 near the liquid surface. The circulation pump 67 as an example of the circulation device is provided in the circulation flow path 47 and circulates the ink through the circulation flow path 47. Specifically, the circulation pump 67 flows the ink from the outflow port 71 to the inflow port 72 of the circulation flow path 47.

<Head Circulation Part> The head circulation part 40D includes a supply flow path 44, a recovery flow path 45, a bypass flow path 46, a supply valve 54, a recovery valve 55, a bypass valve 56, and a supply pump 64. The supply flow path 44 and the recovery flow path 45 are provided so as to communicate the ink tank 32 with the recording head 21. The bypass flow path 46 is provided in parallel with the supply flow path 44 so as to bypass the supply pump 64 described later. The supply valve 54 is provided in the supply flow path 44 and adjusts a flow rate of the ink passing through the supply flow path 44. The recovery valve 55 is provided in the recovery flow path 45 and adjusts a flow rate of the ink passing through the recovery flow path 45. The bypass valve 56 is provided in the bypass flow path 46 and adjusts a flow rate of the ink passing through the bypass flow path 46. The supply pump 64 is provided in the supply flow path 44, and allows the ink to flow from the ink tank 32 to the recording head 21 through the supply flow path 44. Further, the supply pump 64 circulates (recovers) the ink from the recording head 21 to the ink tank 32 through the recovery flow path 45. That is, the supply pump 64 circulates the ink through the supply flow path 44 and the recovery flow path 45.

The above-described control device 38 controls the opening and closing of the valves 51 to 56 and the driving of the pumps 61, 62, 64 and 67. The control device 38 is provided with a determination part 39 which determines whether the degassing operation is necessary or changes (switches) the degassing operation according to the amount of dissolved air in the ink. The determination part 39 is a function realized by, for example, a processor executing a program. The control device 38 is the component of the inkjet recording apparatus 1 and also the component of the degassing device 40.

Incidentally, when the ink is degassed under a reduced pressure atmosphere, a reciprocating pump such as a diaphragm pump is easily affected by the reduced pressure, and the ink may not be properly fed under the reduced pressure environment. Therefore, it is preferable that at least the circulation pump 67 of the pumps 61, 62, 64 and 67 described above is a pump for feeding the ink by a rotating body. As the circulation pump 67, a non-positive displacement pump such as a centrifugal pump, a diagonal flow pump, an axial flow pump, or a positive displacement rotary pump such as a vane pump, a gear pump, a screw pump, or the like may be used.

<Operation of Degassing Device> Next, an operation of the degassing device 40 (ink supply structure) will be described with reference to FIG. **2****.** In order to simplify the description, it is assumed that the ink is stored in the ink tank 32. It is assumed that the various pumps 61, 62, 64 and 67 are stopped unless it is clearly stated that they are driven.

<Standby State> When the inkjet recording apparatus 1 is waiting (in a standby state), the replenishment valve 51, the pressure reducing valve 52, and the supply valve 54 are closed, and the atmosphere opening valve 53, the bypass valve 56 and the recovery valve 55 are opened.

<Printing Operation> When the inkjet recording apparatus 1 performs printing (during printing operation), the replenishment valve 51, the pressure reducing valve 52, and the supply valve 54 are closed, and the atmosphere opening valve 53, the bypass valve 56 and the recovery valve 55 are opened, as in the standby state. That is, during the printing operation, the ink tank 32 is opened into the atmosphere, and is at an atmospheric pressure. During the printing operation, the ink tank 32 is not reduced in pressure to the extent that substantial degassing occurs. Every time the ink is ejected from the recording head 21, the ink is supplied from the ink tank 32 to the recording head 21 through the bypass flow path 46 and the recovery flow path 45. When the ink is replenished to the ink tank 32 in the middle of the printing operation (at the replenishment operation), the replenishment valve 51 is opened, and when the replenishment pump 61 is driven, the ink is replenished from the ink container 31 to the ink tank 32 through the replenishment flow path 41.

FIG. 1 and the others are schematically drawn, and the recording head 21 is actually disposed above the ink tank 32. A negative pressure is applied to the ink in the recording head 21 by a head difference from the ink in the ink tank 32, and a meniscus is formed in the nozzle of the recording head 21 by the negative pressure. After the ink is ejected from the recording head 21, the surface tension of the ink acts to reduce the surface area of the meniscus, and the resulting negative pressure draws the reduced amount of the ink from the ink tank 32 into the recording head 21. The recovery valve 55 may be closed to supply the ink to the recording head 21 only from the bypass flow path 46.

If the pressure in the ink tank 32 is reduced to the extent that substantial degassing occurs in a state where the recording head 21 and the ink tank 32 are connected, the meniscus of the nozzle may be destroyed. Even if the meniscus is not destroyed, there is a risk that the shape of the meniscus in the nozzle is changed compared with the case where the ink tank 32 is released to the atmosphere, and the ejecting characteristic of the ink is changed. In the present embodiment, since the pressure in the ink tank 32 is not reduced so as not to cause substantial degassing during the printing operation, the meniscus in the nozzle of the recording head 21 is not destroyed, and since its shape is not changed, the ejection characteristic is not changed.

<Replacement Operation> When the ink in the recording head 21 is replaced (during the replacement operation), the replenishment valve 51, the pressure reducing valve 52, and the bypass valve 56 are closed, and the atmosphere opening valve 53, the supply valve 54, and the recovery valve 55 are opened. When the supply pump 64 is driven, the ink is supplied from the ink tank 32 to the recording head 21 through the supply flow path 44, and recovered from the recording head 21 to the ink tank 32 through the recovery flow path 45. Thus, by circulating the ink between the recording head 21 and the ink tank 32, the ink having an increased viscosity in the recording head 21 is replaced and bubbles generated in the recording head 21 are removed.

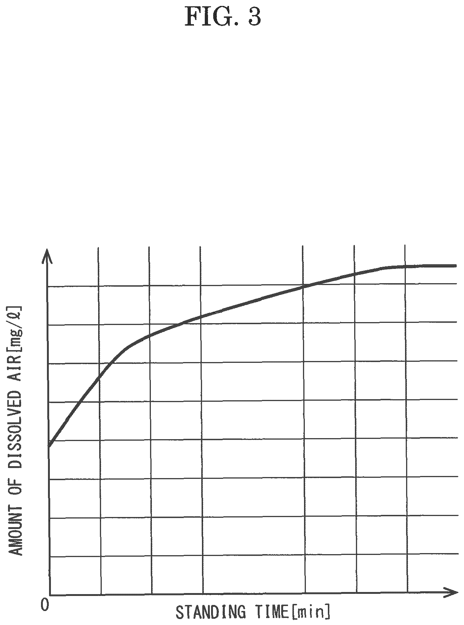

<Degassing Operation> Since the liquid surface of the ink in the ink tank 32 is in contact with the air in the upper space 34 which is opened to the atmosphere, the amount of dissolved air in the ink tends to increase with the passage of time. More specifically, as shown in FIG. 3, an amount of dissolved air [mg/l] in the ink increases with the lapse of the ink standing time [min] (in other words, the non-ejection time during which the recording head 21 does not eject the ink), and becomes saturated and substantially constant after a sufficient standing time has elapsed. Therefore, it is required to remove the air dissolved in the ink in the ink tank 32 (degassing), and the degassing device 40 according to the present embodiment is configured to switch between a first degassing operation and a second degassing operation when degassing the ink in the ink tank 32. In the first degassing operation, while the circulation pump 67 circulates the ink through the circulation flow path 47, the pressure reducing pump 62 reduces the pressure in the ink tank 32. In the second degassing operation, the circulation pump 67 stops the circulation of the ink through the circulation flow path 47, and the pressure reducing pump 62 reduces the pressure in the ink tank 32. Specifically, the first degassing operation is performed when an amount of dissolved air in the ink stored in the ink tank 32 is equal to or larger than a predetermined value (V1), and the second degassing operation is performed when an amount of dissolved air in the ink stored in the ink tank 32 is less than the predetermined value (V1).

In general, the recording head 21 may be included in the middle of the degassing circulation flow path in the circulation degassing system, but in this embodiment, the recording head 21 is not included in the circulation flow path 47. That is, the circulation flow path 47 is provided separately from the flow path for supplying the ink to the recording head 21. Since the recording head 21 is not included in the circulation flow path 47, the possibility that the meniscus formed in the nozzle of the recording head 21 is destroyed by the pressure reducing at the time of degassing and the outside air enters the recording head 21 can be reduced.

Hereinafter, the reason why switching between the first degassing operation and the second degassing operation according to the amount of dissolved air in the ink is effective for degassing the ink will be explained. In this specification, in the first degassing operation, a system in which the ink in the ink tank 32 is circulated and degassed in the state where the inside of the ink tank 32 is reduced in pressure is referred to as "a circulation degassing system", and in the second degassing operation, a system in which the ink in the ink tank 32 is degassed without circulation in the state where the inside of the ink tank 32 is reduced in pressure is referred to as "a non-circulation degassing system".

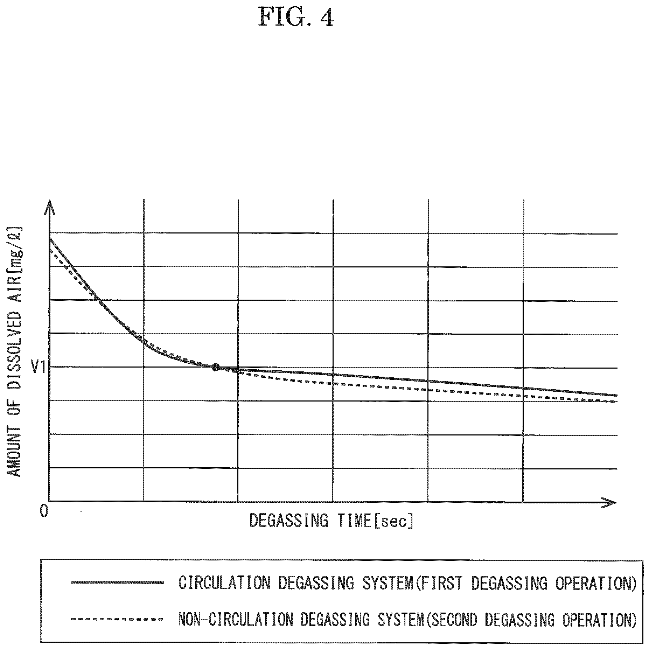

The applicant carried out an experiment comparing the first degassing operation with the second degassing operation, and obtained the result shown in FIG. 4. As shown in FIG. 4, until the amount of dissolved air reaches the predetermined value (V1) (when the amount is equal to or larger than the predetermined value (V1)), the amount of dissolved air can be decreased in a shorter time by the circulation degassing system than by the non-circulation degassing system (see the slope of each graph). On the other hand, after the amount of dissolved air reaches the predetermined value (V1) (when it is less than the predetermined value (V1)), the amount of dissolved air can be kept lower in the non-circulation degassing system than the circulation degassing system.

Considering the above results, the degassing of the ink starts even if the pressure of the upper space 34 of the ink tank 32 is reduced, but when the amount of dissolved air is equal to or larger than the predetermined value (V1), the amount of air that moves from the ink to the upper space 34 is large, the atmospheric pressure in the upper space 34 tends to increase, and therefore, the degassing efficiency tends to be lowered only by the pressure reducing. Therefore, when the amount of dissolved air is equal to or larger than the predetermined value (V1), it is considered that circulating the ink in the ink tank 32 to actively move the ink having a large amount of dissolved air from the vicinity of the bottom surface of the ink tank 32 to the vicinity of the liquid surface is effective in promoting the degassing near the liquid surface. On the other hand, when the amount of dissolved air is less than the predetermined value (V1), it is considered that the degassing only by the pressure reducing is sufficient because the atmospheric pressure increases in the upper space 34 by the degassing is moderate. Further, when the amount of dissolved air is less than the predetermined value (V1), if the ink is continuously circulated, the liquid surface is agitated and the contact area with the air is increased, and it is considered that the air is easily dissolved in the ink, and the degassing efficiency is lowered.

For the reasons described above, the degassing device 40 according to the present embodiment performs the first degassing operation and the second degassing operation while switching them based on an amount of dissolved air in the ink.

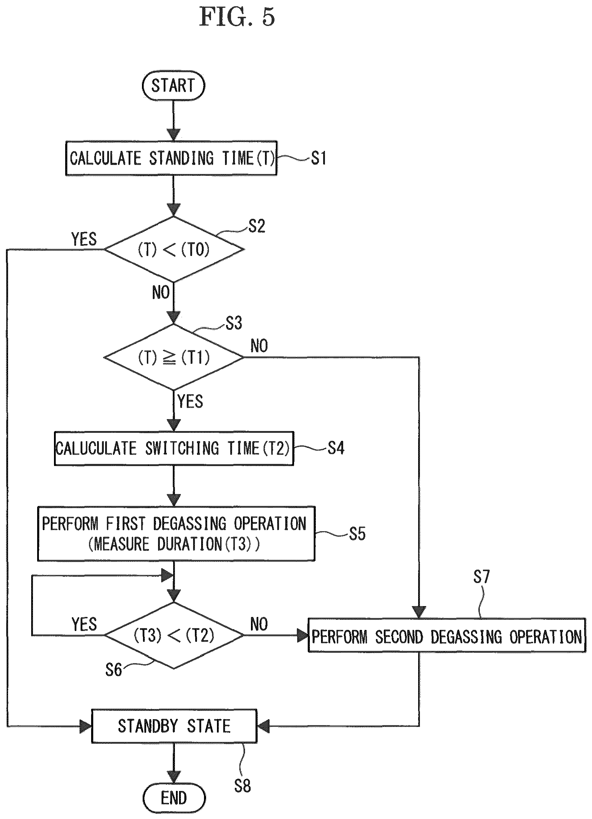

<Degassing Method> Hereinafter, with reference to FIG. 5, a degassing method (degassing control by the control device 38) will be described. FIG. 5 is a flowchart showing the degassing method. It is assumed that when the inkjet recording apparatus 1 is in the sleep state or the power is turned off, the degassing device 40 (ink supply structure) is in the same state as the standby state described above.

Prior to the description of the degassing method, a method for predicting the amount of dissolved air in the ink will be described. The determination part 39 of the control device 38 predicts the amount of dissolved air in the ink based on the standing time of the ink. More specifically, the memory of the control device 38 stores a first data table (not shown) in which the amount of dissolved air in the ink [mg/l] and the ink standing time [min] are related as shown in FIG. 3. The determination part 39 predicts the amount of dissolved air in the ink from the standing time of the ink by referring to the first data table. The memory of the control device 38 stores a second data table (not shown) in which the amount of dissolved air [mg/l] and the degassing time [sec] by the first degassing operation are related as shown in FIG. 4. The predetermined value (V1) of the amount of dissolved air (see FIG. 4) is also stored in the memory. The first data table and the second data table may be obtained experimentally.

Although the first data table relates the amount of dissolved air and the standing time of the ink, the present invention is not limited thereto. As another example of the first data table, the amount of dissolved air in the ink may be related with air temperature (or humidity). In addition, several kinds of the first data tables may be provided. In this case, the determination part 39 may predict the amount of dissolved air in the ink by referring to the first data tables while weighting. Further, as a specific example of the ink standing time, a time from the time when the inkjet recording apparatus 1 is in the sleep state to the time when the inkjet recording apparatus 1 returns from the sleep state, and a time from the power OFF to the power ON of the inkjet recording apparatus 1, and the like are employed.

Next, with reference to FIG. 5, the degassing method will be described. For example, when the inkjet recording apparatus 1 returns from the sleep state or is turned on, the control device 38 calculates the standing time (T) from the measurement result by the timer function provided in standard (step S1). The determination part 39 determines whether the standing time (T) is less than the allowable time (T0) (step S2). If the standing time (T) is less than the allowable time (T0) (T < T0) (YES in step S2), the control device 38 does not perform any degassing operation and puts the inkjet recording apparatus 1 in the standby state (step S8). That is, the determination part 39 determines that the degassing of the ink is unnecessary, and the degassing of the ink is not performed. The allowable time (T0) is a time for determining that the ink can be used without the degassing even if air is dissolved in the left ink, and is obtained experimentally and stored in the memory in advance.

If the standing time (T) is equal to or longer than the allowable time (T0) (T ≧ T0) (NO in step S2), the determination part 39 determines whether the standing time (T) is equal to or longer than the predetermined time (T1) (step S3). The predetermined time (T1) is determined as the time at which the amount of dissolved air becomes equal to the predetermined value (V1) in the first data table, and is stored in the memory in advance.

(First Degassing Operation (First Degassing Process)) When the standing time (T) is equal to or longer than the predetermined time (T1) (T ≧ T1) (YES in step S3), since it is predicted that the amount of dissolved air in the ink tank 32 is equal to or larger than the predetermined value (V1), the control device 38 refers to the second data table and calculates the time (switching time (T2)) until the amount of dissolved air in the ink becomes equal to the predetermined value (V1) by the first degassing operation (step S4). Subsequently, the control device 38 performs the first degassing operation (first degassing step S5). When the first degassing operation is performed, the pressure reducing valve 52 is opened, the other valves 51, 53 to 56 are closed, and the pressure reducing pump 62 and the circulation pump 67 are driven. The pressure reducing pump 62 is driven to discharge the air to the outside from the upper space 34 in the ink tank 32 through the pressure reducing flow path 42. The control device 38 may drive and control the pressure reducing pump 62 so as to maintain the inside of the ink tank 32 at a target pressure (for example, -50 [kPa]) based on an output from a pressure gauge (not shown) provided in the ink tank 32. The liquid surface of the ink is exposed to the reduced pressure atmosphere to remove the air dissolved in the ink near the liquid surface. The circulation pump 67 is driven to circulate the ink in the ink tank 32 through the circulation flow path 47. The ink having a large amount of dissolved air near the bottom surface of the ink tank 32 flows into the circulation flow path 47 from the outflow port 71, and flows into the vicinity of the liquid surface in the ink tank 32 from the inflow port 72 through the circulation flow path 47. The ink near the liquid surface where an amount of dissolved air is small is smoothly replaced with the ink near the bottom surface where an amount of dissolved air is large, and the degassing efficiency can be improved.

Further, the control device 38 measures a time (duration (T3)) from the start of the first degassing operation, and determines whether the duration (T3) is less than the switching time (T2) (step S6). When the duration (T3) is less than the switching time (T2) (T3 < T2) (YES in step S6), it is still predicted that the amount of dissolved air of the ink is equal to or larger than the predetermined value (V1), and therefore, the first degassing operation is continued.

(Second Degassing Operation (Second Degassing Process)) On the other hand, when the duration (T3) is equal to or longer than the switching time (T2) (T3 ≧ T2) (NO in step S6), since it is predicted that the amount of dissolved air of the ink in the ink tank 32 is less than the predetermined value (V1), the control device 38 stops the first degassing operation and performs the second degassing operation (second degassing process S7). That is, the control device 38 switches from the first degassing operation to the second degassing operation. When the first degassing operation is switched into the second degassing operation, the circulation pump 67 is stopped, and the circulation of the ink through the circulation flow path 47 is stopped (see FIG. 2). Thus, the upper space 34 in the ink tank 32 is maintained in the reduced pressure state, and the air dissolved in the ink near the liquid surface is removed.

Returning to the description of step S3, if the standing time (T) is less than the predetermined time (T1) (T < T1) (NO in step S3), it is predicted that the amount of dissolved air of the ink in the ink tank 32 is less than the predetermined value, and therefore the control device 38 performs the second degassing operation (second degassing process S7). When the second degassing operation is performed, the pressure reducing valve 52 is opened, the other valves 51, 53 to 56 are closed, and the pressure reducing pump 62 is driven (the circulation pump 67 is kept in the stopped state) (see FIG. 2). Thus, the upper space 34 in the ink tank 32 is reduced in pressure (for example, -50 [kPa]), and the air dissolved in the ink near the liquid surface is removed.

(Operation after Completion of Degassing) The control device 38 stops (ends) the second degassing operation (second degassing process S7) when the preset time elapses, and puts the inkjet recording apparatus 1 in the standby state (step S8). As described above, in the standby state, the replenishment valve 51, the pressure reducing valve 52, and the supply valve 54 are closed, the atmosphere opening valve 53, the bypass valve 56, and the recovery valve 55 are opened, and all the pumps 61, 62, 64, and 67 are stopped (see FIG. 2).

According to the degassing device 40 (degassing method) according to the present embodiment described above, when the amount of dissolved air in the ink stored in the ink tank 32 is equal to or larger than the predetermined value (V1), the first degassing operation for circulating the ink under the reduced pressure atmosphere is performed so that the amount of dissolved air can be quickly lowered to the predetermined value (V1) by (see FIG. 4). In addition, when the amount of dissolved air in the ink stored in the ink tank 32 is less than the predetermined value (V1), the second degassing operation without circulating the ink under the reduced pressure atmosphere is performed, so that the ink is prevented from being dissolved in the ink near the liquid surface by the circulation of the ink, and the state where the amount of dissolved air in the ink is lower can be maintained compared with the case where the ink is kept circulating (see FIG. 4). Thus, the optimal degassing operation can be selected in accordance with the amount of dissolved air in the ink, and the degassing efficiency of the air dissolved in the ink can be improved. Further, in the circulation degassing system, the ink circulates in the circulation flow path 47 and the ink tank 32, so that the ink near the liquid surface where an amount of dissolved air is small is replaced with the ink near the bottom surface where an amount of dissolved air is large, and the degassing efficiency can be improved.

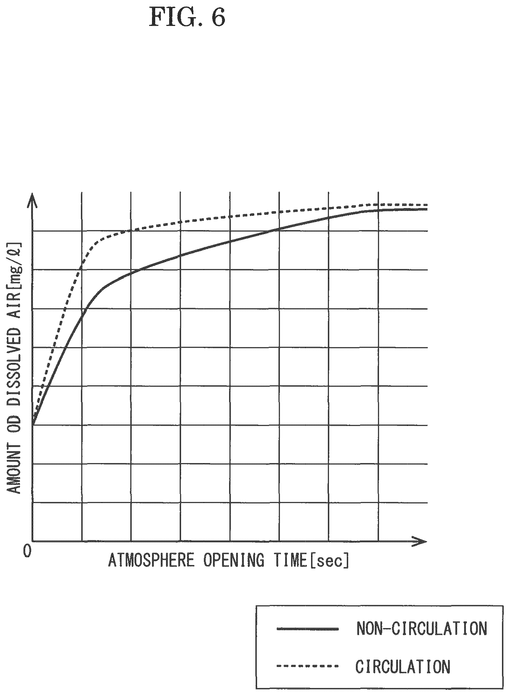

Here, the influence of the circulation of the ink in the ink tank 32 through the circulation flow path 47 on the relationship between the amount of dissolved air in the ink [mg/l] and the time [sec] during which the ink is opened to the atmosphere is considered. The applicant carried out an experiment to confirm how the amount of dissolved air in the ink is changed between the case where the ink is circulated and the case where the ink is not circulated in the state where the upper space 34 is opened to the atmosphere, and obtained the result shown in FIG. 6. As shown by the broken line in FIG. 6, when the ink is circulated through the circulation flow path 47 in the state where the upper space 34 is opened to the atmosphere, the amount of dissolved air in the ink stored in the ink tank 32 rapidly increases. On the other hand, as shown by the solid line in FIG. 6, when the circulation of the ink is stopped, the amount of dissolved air in the ink stored in the ink tank 32 gradually increases.

Therefore, in the degassing device 40 according to the present embodiment, the circulation pump 67 is stopped while the inside of the ink tank 32 (upper space 34) is opened to the atmosphere. Thus, the rapid increase of the amount of dissolved air in the ink stored in the ink tank 32 can be suppressed.

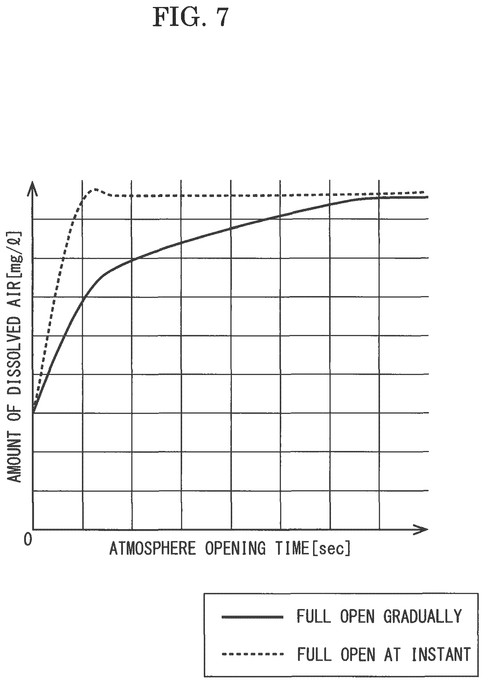

Further, in step S8 of the degassing method, when the upper space 34 in the ink tank 32 is returned to the atmospheric pressure to make it in the standby state, the time [sec] for fully opening the atmosphere opening valve 53 (the time for returning the pressure in the upper space 34 in the ink tank 32 to the atmospheric pressure) may affect the amount of dissolved air [mg/l] in the ink. The applicant carried out an experiment to confirm how the amount of dissolved air in the ink is changed between the case where the atmosphere opening valve 53 is fully opened in an instant (for example, less than 1 second) and the case where it is fully opened for a predetermined time (for example, about 60 seconds), and obtained the result shown in FIG. 7. As shown by the broken line in FIG. 7, when the atmosphere opening valve 53 is fully opened in an instant and a sudden pressure change is applied to the upper space 34 in the ink tank 32, the amount of dissolved air in the ink stored in the ink tank 32 increases rapidly. On the other hand, as shown by the solid line in FIG. 7, when the atmosphere opening valve 53 is fully opened for the predetermined time and the upper space 34 is returned to the atmospheric pressure over time, the amount of dissolved air in the ink stored in the ink tank 32 gradually increases.

Therefore, in the degassing device 40 according to the present embodiment, the atmosphere opening part 40A opens the inside of the ink tank 32 (the upper space 34), which has been reduced in pressure for the predetermined time or longer, to the atmosphere. Specifically, the control device 38 changes the atmosphere opening valve 53 from the closed state to the opened state (full open) over a period of time of 10 to 20 seconds or more, preferably 60 to 120 seconds (an example of the predetermined time or more). Alternatively, the control device 38 may change the atmosphere opening valve 53 from the closed state to the half-open state, keep the half-open state for a predetermined time or longer, and then change the atmosphere opening valve 53 from the half-open state to the fully open state. Thus, by suppressing the rapid pressure change in the upper space 34, the increase in the amount of dissolved air in the ink stored in the ink tank 32 can be made moderate. As a result, the frequency of degassing the ink can be reduced.

Further, although the degassing device 40 according to the present embodiment is provided in the inkjet recording apparatus 1, it is not limited thereto, and can also be applied to devices used in other fields such as the semiconductor manufacturing field and the display manufacturing field. That is, the degassing device 40 can also be applicable to degassing liquids such as chemical liquids, electrolytic liquids, liquid resins, adhesives, solvents, lubricating oils, liquid foods, and beauty lotions.

In the degassing device 40 according to the present embodiment, although the pressure reducing pump 62 is exemplified as the pressure reducing device, the pressure reducing device may be any device capable of reducing the pressure inside the ink tank 32, for example, an ejector (not shown). Similarly, the liquid circulation device may be any device capable of circulating the ink through the circulation flow path 47, for example, an ejector (not shown).

The inkjet recording apparatus 1 according to the present embodiment is a color printer, but it is not limited thereto, and may be a monochrome printer, a copying machine, a facsimile machine, or the like. The sheet may be a sheet-like object to form an image, for example, a plain paper, a coated paper, a tracing paper, or an OHP (Over Head Projector) sheet.

It should be noted that the description of the above embodiments shows one aspect of the degassing device, the inkjet recording apparatus and the degassing method according to the present invention, and the technical range of the present invention is not limited to the above embodiments. The invention may be variously modified, substituted or modified without departing from the spirit of the technical thought, and the claims include all embodiments which may be included within the scope of the technical thought.

## Claims

1. A degassing device (40) which removes air dissolved in a liquid under a reduced pressure atmosphere, the degassing device (40) comprising:
a liquid tank (32) which stores the liquid;
a pressure reducing device (62) which reduces pressure in the liquid tank (32);
a circulation flow path (47) which connects different positions of the liquid tank (32); and
a circulation device (67) which circulates the liquid through the circulation flow path (47), wherein
when air dissolved in the liquid in the liquid tank (32) is removed, the degassing device (40) is switchable into a first degassing operation in which while the circulation device (67) circulates the liquid through the circulation flow path (47), the pressure reducing device (62) reduces the pressure in the liquid tank (32), and into a second operation in which the circulation device (67) stops the circulation of the liquid through the circulation flow path (47) and the pressure reducing device (62) reduces the pressure in the liquid tank.

2. The degassing device (40) according to claim 1, wherein
when the amount of dissolved air in the liquid stored in the liquid tank (32) is equal to or larger than a predetermined value, the first degassing operation is performed, and
when the amount of dissolved air in the liquid stored in the liquid tank (32) is less than the predetermined value, the second degassing operation is performed.

3. The degassing device (40) according to claim 1, comprising:
an atmosphere opening part (40A) which opens the liquid tank (32) to an atmosphere, wherein
the circulation device (67) is stopped while an inside of the liquid tank (32) is opened to the atmosphere.

4. The degassing device (40) according to claim 1, comprising:
an atmosphere opening part (40A) which opens the liquid tank to an atmosphere, wherein
the atmosphere opening part (40A) opens the liquid tank, which has been reduced in pressure, to the atmosphere for a predetermined time or longer.

5. An inkjet recording apparatus (1) comprising:
the degassing device (40) according to claim 1; and
a recording head (21) which ejects a degassed ink as the liquid to a sheet.

6. A degassing method using the degassing device (40) according to claim 1, the degassing method comprising:
a first degassing process of performing the first degassing operation when the amount of dissolved air of the liquid in the liquid tank (32) is equal to or larger than a predetermined value; and
a second degassing process of performing the second degassing operation when the amount of dissolved air of the liquid in the liquid tank (32) is less than the predetermined value.
